(19) Europäisches Patentamt
European Patent Office
Office européen des brevets

(11) EP 4 553 547 A1

(12) **EUROPEAN PATENT APPLICATION**
published in accordance with Art. 153(4) EPC

(43) Date of publication:
**14.05.2025 Bulletin 2025/20**

(21) Application number: **23835367.6**

(22) Date of filing: **27.06.2023**

(51) International Patent Classification (IPC):
***G02B 5/23*** *(2006.01)* ***G02B 1/04*** *(2006.01)*
***G02C 7/00*** *(2006.01)* ***G02C 7/02*** *(2006.01)*
***G02C 7/10*** *(2006.01)*

(52) Cooperative Patent Classification (CPC):
**G02B 1/04; G02B 5/23; G02C 7/00; G02C 7/02; G02C 7/10**

(86) International application number:
**PCT/JP2023/023697**

(87) International publication number:
**WO 2024/009834 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.07.2022 JP 2022107685**

(71) Applicant: **Hoya Lens Thailand Ltd.**
**Pathumthani 12130 (TH)**

(72) Inventors:
- **HIGUCHI Takeshi**
  **Tokyo 160-8347 (JP)**
- **KOBAYASHI Kei**
  **Tokyo 160-8347 (JP)**

(74) Representative: **Hoffmann Eitle**
**Patent- und Rechtsanwälte PartmbB**
**Arabellastraße 30**
**81925 München (DE)**

(54) **PHOTOCHROMIC ARTICLE, AND METHOD FOR PRODUCING PHOTOCHROMIC ARTICLE**

(57) Provided is a photochromic article including a substrate; a primer layer formed by curing a polymerizable composition for forming the primer layer, and a photochromic layer formed by curing a (meth)acrylate-based polymerizable composition containing a photochromic compound, in this order, wherein the polymerizable composition for forming the primer layer contains isocyanate group-containing urethane (meth)acrylate, and the polymerizable composition for forming the primer layer has an isocyanate group content rate of 2.0 mass% or more when a total amount of the composition is set to 100 mass%.



Processed by Luminess, 75001 PARIS (FR)

## Description

[Technical Field]

The present invention relates to a photochromic article and a method for producing a photochromic article.

[Background Art]

A photochromic compound is a compound having a property of coloring under irradiation with light in a wavelength range where the photochromic compound is optically responsive and fading without light irradiation (photochromism). For example, PTL 1 discloses a photochromic article having a layer containing a photochromic compound (photochromic layer) provided on a substrate.

[Citation List]

[Patent Literature]

[PTL 1] Japanese Patent No. 6346183

[Summary of Invention]

[Technical Problem]

With the intention of improving the performance of a photochromic article, the present inventors repeated studies to enhance the adhesive property between a photochromic layer and a substrate.
An object of one aspect of the present invention is to provide a photochromic article having an excellent adhesive property between a photochromic layer and a substrate.

[Solution to Problem]

In PTL 1 (Japanese Patent No. 6346183) mentioned previously, it is disclosed that a primer layer between the substrate and the photochromic layer is formed of a photocurable composition containing urethane (meth)acrylate.
In contrast, as a result of repeating intensive studies, the present inventors newly found that when a primer layer between a substrate and a photochromic layer is formed of a polymerizable composition for forming the primer layer containing isocyanate group-containing urethane (meth)acrylate and having an isocyanate group content rate of 2.0 mass% or more, it is possible to enhance the adhesive property between the substrate and the photochromic layer.
That is, one aspect of the present invention relates to a photochromic article having:

a substrate,
a primer layer formed by curing a polymerizable composition for forming the primer layer, and
a photochromic layer formed by curing a (meth)acrylate-based polymerizable composition containing a photochromic compound,
in this order
in which the polymerizable composition for forming the primer layer contains isocyanate group-containing urethane (meth)acrylate, and
the polymerizable composition for forming the primer layer has an isocyanate group content rate of 2.0 mass% or more when a total amount of this composition is set to 100 mass%.

[Advantageous Effects of Invention]

According to one aspect of the present invention, it is possible to provide a photochromic article having an excellent adhesive property between a substrate and a photochromic layer. In addition, according to one aspect of the present invention, there is provided a method for producing a photochromic article.

[Brief Description of Drawings]

[Fig. 1]
Fig. 1 shows evaluation results regarding the influences of a mixing ratio between urethane (meth)acrylates on

photochromic performance.

[Description of Embodiments]

[Photochromic Article]

A photochromic article according to one aspect of the present invention has a substrate, a primer layer, and a photochromic layer in this order. In the present invention and the present specification, "photochromic article" refers to an article containing a photochromic compound.

Hereinafter, the photochromic article according to one aspect of the present invention will be described in more detail.

<Substrate>

The photochromic article can be an optical article in one aspect. The optical article encompasses various articles such as a spectacle lens, a goggle lens, a visor (bill) part of a sun visor, and a shield member of a helmet. For example, the photochromic article may have a primer layer and a photochromic layer in this order on a substrate selected depending on the type of the optical article. As an example of the substrate, a plastic lens substrate or a glass lens substrate can be used as a spectacle lens substrate. The glass lens substrate can be, for example, an inorganic glass lens substrate. The lens substrate is preferably a plastic lens substrate because the plastic lens substrate is lightweight, hard to break, and easy to handle. Examples of the plastic lens substrate include those of styrene resins including (meth)acrylic resins, polycarbonate resins, allyl carbonate resins such as allyl resins and diethylene glycol bis(allyl carbonate) resins (CR-39), vinyl resins, polyester resins, polyether resins, urethane resins obtained by reacting an isocyanate compound and a hydroxy compound such as diethylene glycol, thiourethane resins obtained by reacting an isocyanate compound and a polythiol compound, and cured products obtained by curing a curable composition containing a (thio)epoxy compound having one or more disulfide bonds in the molecule (generally referred to as transparent resins). The "(meth)acrylic resin" encompasses an acrylic resin and a methacrylic resin. The "(thio)epoxy compound" encompasses an epoxy compound and a thioepoxy compound. As the lens substrates, lenses that are not dyed (colorless lenses) may be used, or lenses that have been dyed (dyed lenses) may be used. The refractive indexes of the lens substrates can be, for example, approximately 1.50 to 1.75. Polycarbonate resins are normally used as lens substrates having a refractive index of 1.59. Allyl carbonate resins such as allyl resins and diethylene glycol bis(allyl carbonate) resins (CR-39) are normally used as lens substrates having a refractive index of 1.50. Urea resins obtained by a reaction between an isocyanate-terminated prepolymer and an aromatic diamine are normally used as lens substrates having a refractive index of 1.53. Diallyl phthalate resins are normally used as lens substrates having a refractive index of 1.55. Urethane resins obtained by a reaction between an isocyanate compound and a hydroxy compound, such as diethylene glycol, are normally used as lens substrates having a refractive index of 1.60. Thiourethane resins obtained by reacting an isocyanate compound and a polythiol compound are normally used as lens substrates having a refractive index of 1.67. Here, the refractive indexes of lens substrates are not limited to the above-described range and may be within the above-described range, or may be above or below the above-described range. In the present invention and the present specification, the refractive index refers to a refractive index with respect to light having a wavelength of 500 nm. The lens substrates may be lenses having an index (so-called prescription lenses) or may be lenses having no indexes (so-called non-prescription lenses).

The spectacle lens can be various lenses including a mono-focal lens, a multi-focal lens, and a progressive power lens. The type of the lens is normally determined by the surface shapes of both surfaces of the lens substrate. In addition, the surface of the lens substrate may be any of a convex surface, a concave surface, or a flat surface. In normal lens substrates and spectacle lenses, the object-side surface is a convex surface, and the eyeball-side surface is a concave surface. However, the present invention is not limited thereto. The photochromic layer can be normally provided on the object-side surface of the lens substrate, but may also be provided on the eyeball-side surface.

<Primer Layer>

(Polymerizable Compound)

The primer layer that is included in the photochromic article is a cured layer obtained by curing a polymerizable composition for forming the primer layer. In the present invention and the present specification, "polymerizable composition" refers to a composition containing a polymerizable compound. The polymerizable compound refers to a compound having a polymerizable group. Specific examples of the polymerizable group include a (meth)acryloyl group, which will be described below.

The polymerizable composition for forming the primer layer contains an isocyanate group-containing urethane

(meth)acrylate. Furthermore, the isocyanate group content rate of the polymerizable composition for forming the primer layer is 2.0 mass% or more when the total amount of this composition is set to 100 mass%. These facts are presumed to contribute to enabling the disposition of the primer layer obtained by curing the polymerizable composition for forming the primer layer between the substrate and the photochromic layer to improve the adhesive property between the substrate and the photochromic layer.

In the present invention and the present specification, "urethane (meth)acrylate" refers to a (meth)acrylate having a urethane bond. The urethane (meth)acrylate normally has a structure in which a "(meth)acryloyl group" is contained in a terminal and/or side chain of a polyurethane skeleton. The present inventors presume that the urethane (meth)acrylate having a urethane bond, which is a highly polar portion, being contained in the polymerizable composition for forming the primer layer is capable of contributing to enhancement of the wettability of a polymerization composition for forming the photochromic layer to the primer layer. Due to this fact, the primer layer and the photochromic layer are preferably adjacent to each other in the photochromic article. Here, "being adjacent" means that the layers are in direct contact with each other with no other layers interposed therebetween.

In the present invention and the present specification, "(meth)acrylate" is used to mean encompassing an acrylate and a methacrylate. "Acrylate" is a compound having one or more acryloyl groups in one molecule. "Methacrylate" is a compound having one or more methacryloyl groups in one molecule. The functional number in the (meth)acrylate is the number of groups selected from the group consisting of acryloyl groups and methacryloyl groups contained in one molecule. In the present invention and the present specification, "methacrylate" refers to a compound containing only a methacryloyl group as the (meth)acryloyl group, and a compound that contains both an acryloyl group and a methacryloyl group as the (meth)acryloyl groups is referred to as an acrylate. The acryloyl group may be contained in the form of an acryloyloxy group, and the methacryloyl group may be contained in the form of a methacryloyloxy group. "(Meth)acryloyl group" is used to mean encompassing an acryloyl group and a methacryloyl group, and "(meth)acryloyloxy group" is used to mean encompassing an acryloyloxy group and a methacryloyloxy group. In addition, unless particularly otherwise specified, groups described may have a substituent or may be unsubstituted. In a case where a group has a substituent, examples of the substituent include alkyl groups (for example, an alkyl group having 1 to 6 carbon atoms), hydroxyl groups, alkoxy groups (for example, an alkoxy group having 1 to 6 carbon atoms), halogen atoms (for example, a fluorine atom, a chlorine atom, and a bromine atom), cyano groups, amino groups, nitro groups, acyl groups, carboxy groups, and the like. In addition, for a group having a substituent, the "number of carbon atoms" means the number of carbon atoms in a portion containing no substituents.

The functional number (the number of groups selected from the group consisting of acryloyl groups and methacryloyl groups contained in one molecule) in the isocyanate group-containing urethane (meth)acrylate that is contained in the polymerizable composition for forming the primer layer is one or more and can be, for example, within a range of one to four. The isocyanate group content rate of the isocyanate group-containing urethane (meth)acrylate can be, for example, 1.0 mass% or more, 3 mass% or more, or 5 mass% or more and can be, for example, 20.0 mass%, 18.0 mass% or less, 16.0 mass% or less, or 14.0 mass% or less. The isocyanate group-containing urethane (meth)acrylate contains no hydroxy groups in the molecule on the principle of synthesis. Containing no hydroxy groups in the molecule is preferable from the viewpoint of the storage stability of the polymerizable composition for forming the primer layer. The isocyanate group-containing urethane (meth)acrylate can be synthesized by a known method or can also be procured as a commercially available product. Examples of the commercially available product include EBECRYL 4141, 4250, 4510, 4396, and 4397 manufactured by Daicel-Allnex Ltd. and the like.

The polymerizable composition for forming the primer layer contains at least one isocyanate group-containing urethane (meth)acrylate as the polymerizable compound. As the polymerizable compound, the polymerizable composition for forming the primer layer may contain only isocyanate group-containing urethane (meth)acrylate in one form and may contain one or more different polymerizable compounds in another form. Examples of such a different polymerizable compound include urethane (meth)acrylate containing no isocyanate groups. The functional number (the number of groups selected from the group consisting of acryloyl groups and methacryloyl groups contained in one molecule) in the urethane (meth)acrylate containing no isocyanate groups is one or more and can be, for example, within a range of one to four. The urethane (meth)acrylate containing no isocyanate groups containing no hydroxy groups in the molecule is preferable from the viewpoint of the storage stability of the polymerizable composition for forming the primer layer. The urethane (meth)acrylate containing no isocyanate groups can be synthesized by a known method or can also be procured as a commercially available product. Examples of the commercially available product include KRM 9276 (monofunctional), KRM 9335 (difunctional), and EBECRYL 230 (difunctional) manufactured by Daicel-Allnex Ltd., UA-224L (difunctional) manufactured by Kyoeisha Chemical Co., Ltd., and the like.

In the polymerizable composition for forming the primer layer, the content of the isocyanate group-containing urethane (meth)acrylate can be, for example, 5 mass% or more and is preferably 10 mass% or more, more preferably 15 mass% or more, and still more preferably 20 mass% or more when the total of the isocyanate group-containing urethane (meth)acrylate and the urethane (meth)acrylate containing no isocyanate groups is set to 100 mass%. From the viewpoint of improving the adhesive property between the substrate and the photochromic layer, the amount of the isocyanate

group-containing urethane (meth)acrylate in the polymerizable composition for forming the primer layer is preferably large. In addition, from the viewpoint of various performances of the photochromic article, in the polymerizable composition for forming the primer layer, the content of the isocyanate group-containing urethane (meth)acrylate is preferably 50 mass% or less, more preferably 40 mass% or less, and still more preferably 30 mass% or less when the total of the isocyanate group-containing urethane (meth)acrylate and the urethane (meth)acrylate containing no isocyanate groups is set to 100 mass%.

(Arbitrary Component)

The polymerizable composition for forming the primer layer contains at least the isocyanate group-containing urethane (meth)acrylate, may contain a different polymerizable compound, such as the urethane (meth)acrylate containing no isocyanate groups, and may further contain one or more components. Examples of such components include a polymerization initiator, a catalyst, and the like. These components can be used in an arbitrary amount, and as these components, known compounds can be used, and commercially available products can also be used.

For example, as the polymerization initiator, a known polymerization initiator capable of functioning as a polymerization initiator for a (meth)acrylate can be used, a radical polymerization initiator is preferable, and it is more preferable that only a radical polymerization initiator is contained as the polymerization initiator. In addition, as the polymerization initiator, a photopolymerization initiator or a thermal polymerization initiator can be used, and a photopolymerization initiator is preferable from the viewpoint of making a polymerization reaction progress within a short period of time. Examples of photoradical polymerization initiators include benzoin ketals such as 2,2-dimethoxy-1,2-diphenylethane-1-one; α-hydroxyketones such as 1-hydroxycyclohexylphenyl ketone, 2-hydroxy-2-methyl-1-phenylpropan-1-one, and 1-[4-(2-hydroxyethoxy)phenyl]-2-hydroxy-2-methyl-1-propan-1-one; α-aminoketones such as 2-benzyl-2-dimethylamino-1-(4-morpholinophenyl)-butane-1-one, and 1,2-methyl-1-[4-(methylthio)phenyl]-2-morpholinopropan-1-one; oxime esters such as 1-[(4-phenylthio)phenyl]-1,2-octadione-2-(benzoyl)oxime; phosphine oxides such as bis(2,4,6-trimethylbenzoyl)phenylphosphine oxide, bis(2,6-dimethoxybenzoyl)-2,4,4-trimethylpentyl phosphine oxide, and 2,4,6-trimethylbenzoyldiphenylphosphine oxide; 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, and 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, and 4-methoxy-4'-dimethylaminobenzophenone; quinone compounds such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methyl benzoin, and ethyl benzoin; benzyl compounds such as benzyl dimethyl ketal; acridine compounds such as 9-phenylacridine, 1,7-bis(9,9'-acridinyl heptane); N-phenylglycine, coumarin, and the like. In addition, in the 2,4,5-triarylimidazole dimers, as substituents for the aryl groups in two triarylimidazole portions, the same and symmetric compounds may be imparted, or different and asymmetric compounds may be imparted. In addition, a thioxanthone compound and a tertiary amine may be combined together like a combination of diethylthioxanthone and dimethylaminobenzoic acid. Among these, α-hydroxyketone and phosphine oxide are preferable from the viewpoint of curability, transparency, and heat resistance.

Examples of the catalyst include organic tin-based compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The organic tin-based compounds are capable of exhibiting a catalytic action on isocyanate groups.

The polymerizable composition for forming the primer layer may or may not contain a solvent. In a case where the composition contains a solvent, any solvent can be used in an arbitrary amount as a usable solvent as long as the progress of the polymerization reaction of the polymerizable compound is not impaired. In the present invention and the present specification, regarding the content rate, "total amount of the composition" refers to the total amount of all components excluding a solvent in a composition containing the solvent.

The polymerizable composition for forming the primer layer may further contain a known additive that can be normally added to compositions for forming the primer layer in an arbitrary amount. As the additive, a known compound can be used, and a commercially available product can also be used. In the polymerizable composition for forming the primer layer, the total content of the isocyanate group-containing urethane (meth)acrylate and an isocyanate containing no isocyanate groups can be 80.0 mass% or more, 85.0 mass% or more, 90.0 mass% or more, or 95.0 mass% or more when the total amount of the composition (here, the polymerization initiator is excluded) is set to 100 mass%. In addition, in the polymerizable composition for forming the primer layer, the total content rate of the isocyanate group-containing urethane (meth)acrylate and the isocyanate containing no isocyanate groups can be, for example, 100 mass%, 100 mass% or less,

less than 100 mass%, or 99.0 mass% or less when the total amount of the composition (here, the polymerization initiator is excluded) is set to 100 mass%.

(Isocyanate Group Content Rate of Polymerizable Composition for Forming Primer Layer)

The isocyanate group content rate of the polymerizable composition for forming the primer layer is 2.0 mass% or more, more preferably 2.1 mass% or more, and still more preferably 2.2 mass% or more when the total amount of this composition is set to 100 mass%. The present inventors presume that the reason for the disposition of the primer layer formed of the polymerizable composition for forming the primer layer between the substrate and the photochromic layer capable of improving the adhesive property between the substrate and the photochromic layer is that the polymerizable composition for forming the primer layer contains the isocyanate group-containing urethane (meth)acrylate and the isocyanate group content rate in the composition is 2.0 mass% or more. The present inventors consider that the isocyanate group is capable of contributing to the maintenance of a high adhesive property between the substrate and the photochromic layer even in high-temperature and humidity environments.

In addition, the isocyanate group content rate of the polymerizable composition for forming the primer layer can be, for example, 5.0 mass% or less, 4.0 mass% or less, or 3.0 mass% or less. However, the isocyanate group content rate of the polymerizable composition for forming the primer layer is preferably high from the viewpoint of improvement in the adhesive property between the substrate and the photochromic layer, and the upper limit of the isocyanate group content rate of the polymerizable composition for forming the primer layer is thus not limited to values exemplified herein.

For example, in a case where a component that contains the isocyanate group is only the isocyanate group-containing urethane (meth)acrylate in the polymerizable composition for forming the primer layer, the isocyanate group content rate when the total amount of the polymerizable composition for forming the primer layer is set to 100 mass% can be calculated by, for example, the following equation.

Isocyanate group content rate when total amount of polymerizable composition for forming primer layer is set to

$$100\ \text{mass\%} = Y \times X/T$$

In the equation, the isocyanate group content rate of the isocyanate group-containing urethane (meth)acrylate is represented by "X" mass%, the amount of the isocyanate group-containing urethane (meth)acrylate in the polymerizable composition for forming the primer layer is represented by "Y" g (grams), and the total amount of the composition is represented by "T" g (grams).

The composition for forming the primer layer can be prepared by mixing the above-described various components at the same time or sequentially in arbitrary order.

The polymerizable composition for forming the primer layer is applied onto the substrate, and a curing treatment is performed on the applied composition, whereby the primer layer, which is a cured layer obtained by curing the polymerizable composition for forming the primer layer, can be formed on the substrate. The polymerizable composition for forming the primer layer can be directly applied to the surface of the substrate or can also be applied to the surface of a layer provided on the substrate. That is, in the photochromic article, the base material and the photochromic layer are adjacent to each other in one form, and the primer layer is positioned on the substrate with one or more different layers interposed therebetween in another form. Examples of the different layer include known layers such as a hard coat layer. As an application method, a known application method such as a spin coating method or a dip coating method can be employed, and a spin coating method is preferable from the viewpoint of the uniformity of application. In order to clean the surface of the substrate or the like, one or more known pretreatments such as an alkaline treatment and a UV ozone treatment can be arbitrarily performed on the surface of the substrate. The curing treatment can be light irradiation and/or a heating treatment, and light irradiation is preferable from the viewpoint of making a curing reaction to progress within a short period of time. Curing treatment conditions may be determined depending on the types of various components that are contained in the polymerizable composition for forming the primer layer and the formulation of the polymerizable composition for forming the primer layer.

The thickness of the primer layer can be, for example, 3 μm or more, and is preferably 5 μm or more. In addition, the thickness of the primer layer can be, for example, 15 μm or less, and is preferably 10 μm or less.

<Photochromic Layer>

<<Polymerizable Compound>>

The photochromic article has a photochromic layer on the primer layer. The photochromic layer that is included in the photochromic article is a cured layer obtained by curing a (meth)acrylate-based polymerizable composition. In the present invention and the present specification, "(meth)acrylate-based polymerizable composition" refers to a polymerizable composition containing a (meth)acrylate. The polymerizable composition for forming the primer layer also contains the urethane (meth)acrylate described above and can be thus referred to as a (meth)acrylate-based polymerizable composition. The present inventors presume that the fact that the primer layer and the photochromic layer are both cured layers obtained by curing the (meth)acrylate-based polymerizable composition is capable of contributing to improvement in the adhesive property between the substrate and the photochromic layer.

Hereinafter, the (meth)acrylate-based polymerizable composition, which is one form of a polymerizable composition for forming the photochromic layer, will be described. Here, the following form is merely an example, and the present invention is not limited only to such an example.

The polymerizable composition for forming the photochromic layer can be a (meth)acrylate-based polymerizable composition containing one or more polymerizable compounds selected from the group consisting of the following component A, the following component B, and the following component C in one form.

(Component A)

The component A is a multifunctional (meth)acrylate containing a polyalkylene glycol portion and having a molecular weight of 500 or more. In the present invention and the present specification, "polyalkylene glycol portion" refers to a partial structure represented by the following Formula 2:

[C1]

(Formula 2)

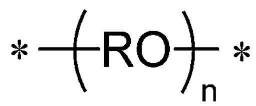

In Formula 2, R represents an alkylene group, and n represents the number of repetitions of an alkoxy group represented by RO and is 2 or more. * indicates a bonding position at which the partial structure represented by Formula 2 is bonded to an adjacent atom. The number of carbon atoms in the alkylene group represented by R can be one or more or two or more, and can be, for example, five or less or four or less. Specific examples of the alkylene group represented by R include an ethylene group, a propylene group, a tetramethylene group, and the like. n is 2 or more, and can be, for example, 30 or less, 25 or less or 20 or less. In one form, the component A may have the above-described partial structure in which R represents an ethylene group, that is, a polyethylene glycol portion. In addition, in one form, the component A may have the above-described partial structure in which R represents a propylene group, that is, a polypropylene glycol portion.

The molecular weight of the component A is 500 or more. In the present invention and the present specification, as the molecular weight of a multimer, a theoretical molecular weight calculated from the structural formula determined by structural analysis of a compound or the ratio between raw materials prepared during production is employed. The molecular weight of the component A is 500 or more, preferably 510 or more, more preferably 520 or more, preferably 550 or more, more preferably 570 or more, still more preferably 600 or more, still more preferably 630 or more, and far still more preferably 650 or more. The molecular weight of the component A is preferably, for example, 2000 or less, 1500 or less, 1200 or less, 1000 or less, or 800 or less from the viewpoint of increasing the hardness of the photochromic layer.

The component A can be a multifunctional (meth)acrylate, for example, a difunctional, trifunctional, tetrafunctional, or pentafunctional (meth)acrylate, and is preferably a difunctional or trifunctional (meth)acrylate. The component A may contain, as a (meth)acryloyl group, only an acryloyl group, only a methacryloyl group, or an acryloyl group and a methacryloyl group. That is, the component A can be an acrylate or a methacrylate.

In one form, the component A can be an acyclic multifunctional (meth)acrylate. In the present invention and the present specification, "being acyclic" means that no cyclic structures are included. On the other hand, "being cyclic" means that a cyclic structure is included. The acyclic multifunctional (meth)acrylate refers to a di- or higher functional (meth)acrylate including no cyclic structures. Specific examples of such a component A include polyalkylene glycol di(meth)acrylate represented by the following Formula 3.

[C2]

(Formula 3)

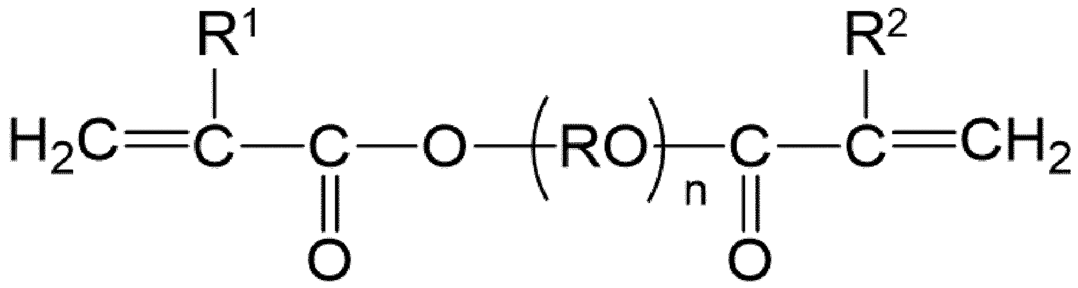

In Formula 3, $R^1$ and $R^2$ each independently represent a hydrogen atom or a methyl group, R represents an alkylene group, and n represents the number of repetitions of an alkoxy group represented by RO and is 2 or more. R and n are as described above regarding the partial structure represented by Formula 2. The polyalkylene glycol di(meth)acrylate represented by Formula 3 may contain, as a (meth)acryloyl group, only an acryloyl group, only a methacryloyl group, or an acryloyl group and a methacryloyl group. Specific examples of the polyalkylene glycol di(meth)acrylate represented by Formula 3 include polyethylene glycol di(meth)acrylate, polypropylene glycol di(meth)acrylate, polytetramethylene glycol di(meth)acrylate, and the like.

In addition, specific examples of the component A include tri(meth)acrylate represented by the following Formula 4. The tri(meth)acrylate represented by Formula 4 may contain, as a (meth)acryloyl group, only an acryloyl group, only a methacryloyl group, or an acryloyl group and a methacryloyl group.

[C3]

(Formula 4)

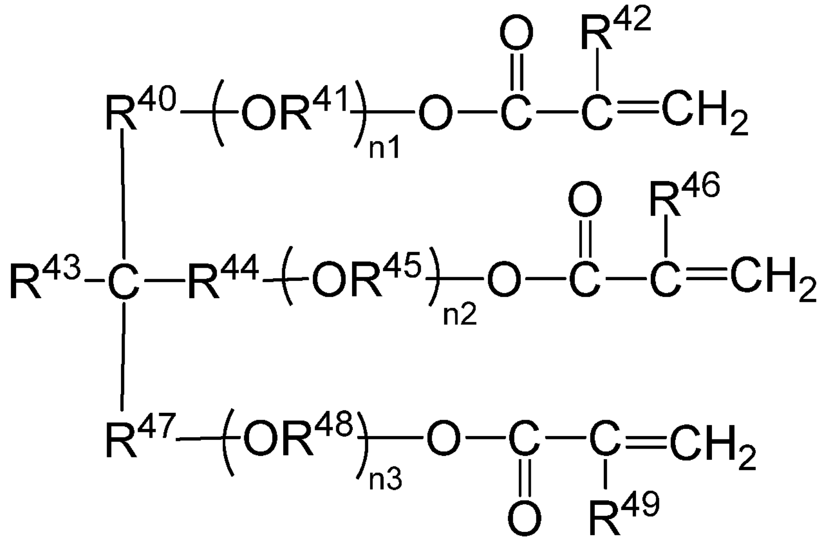

In Formula 4, $R^{40}$, $R^{41}$, $R^{44}$, $R^{45}$, $R^{47}$, and $R^{48}$ each independently represent an alkylene group, $R^{43}$ represents an alkyl group, and $R^{42}$, $R^{46}$, and $R^{49}$ each independently represent a hydrogen atom or a methyl group. n1 represents the number of repetitions of an alkoxy group represented by $OR^{41}$ and is 2 or more. n2 represents the number of repetitions of an alkoxy group represented by $OR^{45}$, and is 2 or more. n3 represents the number of repetitions of an alkoxy group represented by $OR^{48}$ and is 2 or more.

Hereinafter, Formula 4 will be described in more detail.

$R^{41}$, $R^{45}$, and $R^{48}$ in Formula 4 are as described above regarding R in Formula 2. n1, n2, and n3 in Formula 4 are as described above regarding n in Formula 2. In Formula 4, $R^{41}$, $R^{45}$, and $R^{48}$ may be the same as one another, or two or three thereof may be different from one another. This is also true for n1, n2, and n3.

$R^{42}$, $R^{46}$, and $R^{49}$ each independently represent a hydrogen atom or a methyl group. The tri(meth)acrylate represented by Formula 4 may contain, as a (meth)acryloyl group, only an acryloyl group, only a methacryloyl group, or an acryloyl group and a methacryloyl group.

The number of carbon atoms in the alkyl group represented by $R^{43}$ can be 1 or more or 2 or more, and can be, for example, 5 or less or 4 or less. The alkyl group represented by $R^{43}$ can be a linear alkyl group or a branched alkyl group.

Specific examples of the alkyl group represented by $R^{43}$ include a methyl group, an ethyl group, and the like.

$R^{40}$, $R^{44}$, and $R^{47}$ each independently represent an alkylene group. The number of carbon atoms in such an alkylene group can be 1 or more or 2 or more, and can be, for example, 5 or less or 4 or less. Specific examples thereof include an ethylene group, a propylene group, a tetramethylene group, and the like.

Specific examples of the tri(meth)acrylate represented by Formula 4 include trimethylolpropane polyoxyethylene ether tri(meth)acrylate and the like.

Monofunctional (Meth)acrylate

From the viewpoint of increasing the (meth)acryloyl group content of the polymerizable composition containing a (meth)acrylate, a (meth)acrylate having a high proportion of the (meth)acryloyl group in the molecule is preferable. Therefore, a monofunctional (meth)acrylate having a low molecular weight is preferable, and a monofunctional (meth) acrylate having a molecular weight of 150 or less is more preferable. The monofunctional (meth)acrylate having a molecular weight of 150 or less may be a cyclic monofunctional (meth)acrylate or an acyclic monofunctional (meth) acrylate. Specific examples of the cyclic monofunctional (meth)acrylate having a molecular weight of 150 or less include glycidyl(meth)acrylate and the like. Specific examples of the acyclic monofunctional (meth)acrylate having a molecular weight of 150 or less include n-butyl(meth)acrylate and the like. The molecular weight of the monofunctional (meth) acrylate having a molecular weight of 150 or less can be, for example, 100 or more, but is not limited thereto.

Multifunctional (Meth)acrylate

As described above, from the viewpoint of increasing the (meth)acryloyl group content of the polymerizable composition containing a (meth)acrylate, a (meth)acrylate having a high proportion of the (meth)acryloyl group in the molecule is preferable. Therefore, a multifunctional (meth)acrylate having a smaller molecular weight than the component A is also preferable. As such a multifunctional (meth)acrylate, a multifunctional (meth)acrylate having a higher functional number than the multifunctional (meth)acrylate used as the component A is also preferable. The molecular weight of such a multifunctional (meth)acrylate is preferably less than 500, 400 or less, 300 or less, or 200 or less. The molecular weight can be, for example, 100 or more, but is not limited thereto. In addition, such a multifunctional (meth)acrylate can be, for example, a deca- or higher (for example, deca- or higher and pentadeca- or lower) multifunctional (meth)acrylate. Specific examples thereof include poly[(3-methacryloyloxypropyl)silsesquioxane] derivatives to be described in the section of Examples to be described below.

Examples of the (meth)acrylate that can be contained in the (meth)acrylate-based polymerizable composition, which is the polymerizable composition for forming the photochromic layer, include a monofunctional (meth)acrylate represented by the following Formula 1 (hereinafter, also referred to as "component B") and a difunctional (meth)acrylate represented by the following Formula 5 (hereinafter, also referred to as "component C"). In one form, the (meth) acrylate-based polymerizable composition can be a polymerizable composition containing one or more (meth)acrylates selected from the group consisting of a monofunctional (meth)acrylate represented by the following Formula 1 and a difunctional (meth)acrylate represented by the following Formula 5. In another form, the (meth)acrylate-based polymerizable composition can be a polymerizable composition that does not contain one or more (meth)acrylates selected from the group consisting of the monofunctional (meth)acrylate represented by the following Formula 1 and the difunctional (meth) acrylate represented by the following Formula 5. In one form, the (meth)acrylate-based polymerizable composition can also contain the component B as the monofunctional (meth)acrylate having a molecular weight of 150 or less.

(Component B)

The component B is the monofunctional (meth)acrylate represented by the following Formula 1.

[C4]

(Formula 1)

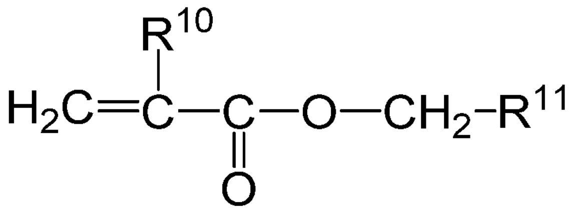

Hereinafter, Formula 1 will be described in more detail.

In Formula 1, $R^{10}$ represents a hydrogen atom or a methyl group. The monofunctional (meth)acrylate represented by Formula 1 may be an acrylate or a methacrylate.

$R^{11}$ represents a linear alkyl group having 3 or more carbon atoms or a branched alkyl group having 3 or more carbon atoms. The number of carbon atoms in the linear or branched alkyl group represented by $R^{11}$ is 3 or more, preferably 4 or more, more preferably 5 or more, and still more preferably 6 or more, 7 or more, 8 or more, 9 or more, 10 or more, and 11 or more in order. On the other hand, from the viewpoint of the solubility of a photochromic compound in the composition, the number of carbon atoms is preferably 15 or less, more preferably 14 or less, and still more preferably 13 or less and 12 or less in order.

The molecular weight of the monofunctional (meth)acrylate represented by Formula 1 can be, for example, 100 or more, or can be, for example, 300 or less. However, the molecular weight is not limited to the above-described range. As described above, in one form, the monofunctional (meth)acrylate represented by Formula 1 can be a monofunctional (meth)acrylate having a molecular weight of 150 or less. Specific examples of the monofunctional (meth)acrylate represented by Formula 1 include n-butyl(meth)acrylate, 2-ethylhexyl(meth)acrylate, isodecyl(meth)acrylate, n-lauryl(meth)acrylate, and the like.

(Component C)

The component C is a (meth)acrylate represented by the following Formula 5.

[C5]

(Formula 5)

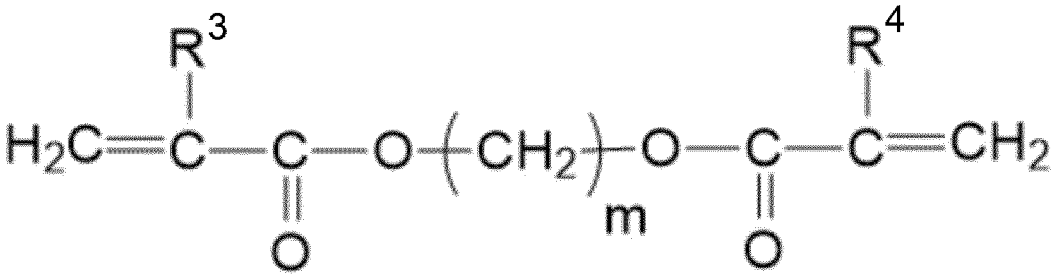

In Formula 5, $R^3$ and $R^4$ each independently represent a hydrogen atom or a methyl group, and m represents an integer of 1 or more. m is 1 or more, and can be, for example, 10 or less, 9 or less, 8 or less, 7 or less, or 6 or less.

The molecular weight of the component C can be, for example, 400 or less, and from the viewpoint of further increasing the coloring density of the photochromic layer, the molecular weight is preferably 350 or less, more preferably 300 or less, and still more preferably 250 or less. In addition, the molecular weight of the component C can be, for example, 100 or more, 150 or more, or 200 or more.

The component C may contain, as a (meth)acryloyl group, only an acryloyl group, only a methacryloyl group, or an acryloyl group and a methacryloyl group. Specific examples of the component C include 1,9-nonanediol di(meth)acrylate, 1,6-hexanediol di(meth)acrylate, 1,10-decanediol di(meth)acrylate, and the like.

In the (meth)acrylate-based polymerizable composition, the content rate of the component A is preferably 50 mass% or more, more preferably 55 mass% or more, and still more preferably 60 mass% or more when the total amount of the polymerizable compounds in the composition is set to 100 mass%. In one form, the component A can be a component that accounts for the largest fraction among the plurality of polymerizable compounds contained in the composition. In addition, the content rate of the component A can be 90 mass% or less, 85 mass% or less, or 80 mass% or less when the

total amount of the polymerizable compounds in the composition is set to 100 mass%. The composition may contain only one type of the component A in one form, and may contain two or more types thereof in another form. In a case where two or more types of the components A are contained, the content rate of the component A is the total content rate of the two or more types thereof. This is also true for the content rates of other components in the present invention and the present specification.

The (meth)acrylate-based polymerizable composition may contain the various (meth)acrylates described above in, for example, an amount such that the (meth)acryloyl group content of the composition reaches 3.50 mmol/g or more. For example, in the (meth)acrylate-based polymerizable composition, the content of the monofunctional (meth)acrylate having a molecular weight of 150 or less is preferably 5 mass% or more, more preferably 10 mass% or more, and more preferably 15 mass% or more when the total amount of the polymerizable compounds in the composition is set to 100 mass%. In addition, the content rate of the monofunctional (meth)acrylate having a molecular weight of 150 or less is preferably 30 mass% or less and more preferably 25 mass% or less when the total amount of the polymerizable compounds in the composition is set to 100 mass%.

From the viewpoint of improving the weather resistance of the photolayer, the (meth)acryloyl group content of the (meth)acrylate-based polymerizable composition is preferably 3.50 mmol/g or more, more preferably 3.55 mmol/g or more, still more preferably 3.60 mmol/g or more, far still more preferably 3.65 mmol/g or more, even far still more preferably 3.70 mmol/g or more, and particularly preferably 3.75 mmol/g or more. The (meth)acryloyl group content of the (meth) acrylate-based polymerizable composition can be, for example, 5.00 mmol/g or less, 4.50 mmol/g or less, or 4.00 mmol/g or less, or may exceed the values exemplified here.

"(Meth)acryloyl group content" of the polymerizable composition containing a (meth)acrylate is calculated as described below.

The total content of the (meth)acrylates contained in the polymerizable composition was set to "1" in terms of mass, and the content rate of each of the (meth)acrylates is calculated.

For each of the (meth)acrylates, "(meth)acryloyl group content × content rate described above" is obtained. The total of the values thus calculated for all of the (meth)acrylates contained in the polymerizable composition is regarded as the (meth)acryloyl group content of the polymerizable composition.

As an example, a photochromic compound that is contained in the photochromic layer is irradiated with light, such as sunlight, and undergoes an excited state and a structural change. The structure after the structural change due to light irradiation can be referred to as "colored body." On the other hand, the structure before light irradiation can be referred to as "colorless body." Regarding the colorless body, "being colorless" is not limited to being completely colorless, and encompasses a case where the color is light compared with that of the colored body. When the colored body has undergone a structural change due to light irradiation and has been colored, the fading rate becomes faster as the rate of the structural change from the colored body to a colorless body becomes faster. It is considered that, in the photochromic layer, as the molecular motion of the photochromic compound becomes easier in the matrix formed by the polymerization reaction of the polymerizable compound, the rate of the structural change becomes faster. From the viewpoint of increasing such a rate, it is considered that a flexible matrix is desirable. Regarding the above-described point, the component A is presumed to be capable of contributing to making the matrix flexible. In detail, it is considered that a flexible matrix can be formed by the component A because the molecular weight of the component A is 500 or more and the component A has the polyalkylene glycol portion.

In addition, it is considered that the (meth)acryloyl group content in the (meth)acrylate-based polymerizable composition being 3.50 mmol/g or more contributes to the formation of a rigid polymer network between molecules in the matrix formed of such a composition. It is presumed that the (meth)acrylate-based polymerizable composition makes it possible to form a photochromic layer having excellent weather resistance because, in the matrix having a rigid polymer network, diffusion of an active species capable of degrading weather resistance can be suppressed.

The content rate of the polymerizable compound (in a case where a plurality of polymerizable compounds are contained, the total content rate thereof) in the (meth)acrylate-based polymerizable composition can be, for example, 80 mass% or more, 85 mass% or more, or 90 mass% or more when the total amount of the composition is set to 100 mass%. In addition, the content rate of the polymerizable compound in the (meth)acrylate-based polymerizable composition can be, for example, 99 mass% or less, 95 mass% or less, 90 mass% or less, or 85 mass% or less when the total amount of the composition is set to 100 mass%. The (meth)acrylate-based polymerizable composition may or may not contain a solvent. In a case where the composition contains a solvent, any solvent can be used in an arbitrary amount as a usable solvent as long as the progress of the polymerization reaction of the polymerizable compound is not impaired.

<<Photochromic Compound>>

The composition contains a photochromic compound together with the polymerizable compound. As the photochromic compound contained in the composition, known compounds exhibiting photochromism can be used. The photochromic compound is capable of exhibiting photochromism with respect to, for example, ultraviolet rays.

Examples of the photochromic compound include compounds having a known skeleton that exhibit photochromism such as fulgimide compounds, spirooxazine compounds, chromene compounds, and indeno-condensed naphthopyran compounds. One kind of the photochromic compound can be used singly or two or more kinds thereof can be mixed and used. The content rate of the photochromic compound in the composition can be, for example, approximately 0.1 to 15 mass% when the total amount of the composition is set to 100 mass%, but the content rate is not limited to this range.

<<Other Components>>

The polymerizable composition for forming the photochromic layer may contain, in addition to the polymerizable compounds and the photochromic compound, one or more of various additives that can be normally contained in polymerizable compositions in any content rate. The additive that can be contained in the polymerizable composition for forming the photochromic layer is, for example, a polymerization initiator for making the polymerization reaction progress. Regarding the polymerization initiator, the above description can be referred to. The content rate of the polymerization initiator can be, for example, within a range of 0.1 to 5.0 mass% when the total amount of the composition is set to 100 mass%.

To the polymerizable composition for forming the photochromic layer, known additives that can be normally added to compositions containing a photochromic compound, for example, a surfactant, an antioxidant, a radical scavenger, a light stabilizer, an ultraviolet absorber, an anti-coloring agent, an antistatic agent, a fluorescent dye, a dye, a pigment, a perfume, a plasticizer, a silane coupling agent, and the like can be further added in any amount. As these additives, known compounds can be used.

The polymerizable composition for forming the photochromic layer can be prepared by mixing the above-described various components at the same time or sequentially in arbitrary order.

The photochromic layer can be formed by applying the polymerizable composition for forming the photochromic layer onto the primer layer and performing a curing treatment on the applied composition. Regarding an application method, the above description can be referred to. The curing treatment can be light irradiation and/or a heating treatment, and light irradiation is preferable from the viewpoint of making a curing reaction progress within a short period of time. Curing treatment conditions may be determined depending on the types of the various components that are contained in the polymerizable composition for forming the photochromic layer (the polymerizable compounds, the polymerization initiator, and the like described above), and the formulation of the composition. The thickness of the photochromic layer thus formed is, for example, preferably within a range of 5 to 80 μm, and more preferably within a range of 20 to 60 μm.

The photochromic article having the photochromic layer may or may not further have one or more functional layers in addition to the above-described various layers. Examples of the functional layers include layers known as functional layers for optical articles such as a protective layer, a hard coat layer, an antireflection layer, a water-repellent or hydrophilic anti-fouling layer, and an anti-fogging layer, which are for durability improvement. For example, regarding the protective layer, descriptions of Paragraphs 0009 to 0021 and 0026 of Japanese Patent Application Publication No. 2021-107909, Examples of the same publication, and the like can be referred to.

The photochromic article can be an optical article, and one form of the optical article is a spectacle lens. In addition, examples of one form of the optical article include a goggle lens, a visor (bill) part of a sun visor, and a shield member of a helmet, and the like. When the polymerizable composition for forming the photochromic is applied onto a substrate for these optical articles through a primer layer and a curing treatment is performed on the applied composition to form a photochromic layer, an optical article having an anti-glare function can be obtained.

[Spectacles]

One aspect of the present invention relates to spectacles including spectacle lenses, which are one form of the photochromic article. The details of the spectacle lens that is included in these spectacles are as described above. The spectacles include such spectacle lenses and are thereby capable of exhibiting an anti-glare effect, like sunglasses, for example, outdoors due to the photochromic compound contained in the photochromic layer coloring when irradiated with sunlight and capable of restoring transmitting properties due to the photochromic compound fading when moved back indoors. A known technique can be applied to the spectacles regarding the configuration of a frame or the like.

[Method for Producing Photochromic Article]

One aspect of the present invention relates to a method for producing a photochromic article, including:

applying the above-described polymerizable composition for forming the primer layer onto a substrate,
forming a primer layer by performing a curing treatment by light irradiation on the applied polymerizable composition for forming the primer layer,

applying a (meth)acrylate-based polymerizable composition containing a photochromic compound onto the formed primer layer, and
forming a photochromic layer by performing a curing treatment by light irradiation on the applied (meth)acrylate-based polymerizable composition containing a photochromic compound.

According to the above-described production method, it is possible to produce a photochromic article having an excellent adhesive property between a substrate and a photochromic layer. Regarding the details of the production method, the above description can be referred to.

[Examples]

Hereinafter, the present invention will be further described with Examples. However, the present invention is not limited to embodiments shown in Examples.

<Substrate>

Various substrates to be described below are plastic lens substrates to be described below. In all of the substrates, the object-side surface is a convex surface, and the eyeball-side surface is a concave surface. A substrate 4 (refractive index: 1.59) was a substrate having hard coat layers attached to both surfaces, and the application of a polymerizable composition for forming a primer layer to be described below was performed on the surfaces of the hard coat layers.

Substrate 1: Refractive index 1.50 (diethylene glycol bis(allyl carbonate) resins (CR-39)
Substrate 2: Refractive index 1.53 (urea resin)
Substrate 3: Refractive index 1.55 (diallyl phthalate resin)
Substrate 4: Refractive index 1.59 (polycarbonate resin)
Substrate 5: Refractive index 1.60 (urethane resin)
Substrate 6: Refractive index 1.67 (thiourethane resin)

[Example 1]

<Production of Spectacle Lens (Photochromic Article)>

A plastic lens substrate was immersed in a 10 mass% sodium hydroxide aqueous solution (liquid temperature: 60°C) for five minutes, then, washed with pure water, and dried. After that, a primer layer was formed on the convex surface (object-side surface) of the plastic lens substrate. In detail, KRM 9276 manufactured by Daicel-Allnex Ltd. was used as urethane acrylate containing no isocyanate groups, EBECRYL 4141 (isocyanate group content rate: 12.0 mass%) manufactured by Daicel-Allnex Ltd. was used as isocyanate group-containing urethane acrylate, and these two kinds of urethane acrylate (20 g in total, KRM 9276:EBECRYL 4141 (mass ratio) = 8:2) were mixed together. With respect to 100 mass% of the total amount of a mixture thus obtained, 0.02 mass% of an organic tin-based compound (dibutyltin dilaurate manufactured by Tokyo Chemical Industry Co., Ltd.), 0.005 mass% of a photoradical polymerization initiator (bis(2,4,6-trimethylbenzoyl)phenylphosphine oxide (Omnirad 819 manufactured by IGM Resin B.V.)), and 0.25 mass% of a leveling agent (LE-605 manufactured by Kyoeisha Chemical Co., Ltd.,) were mixed with the mixture and sufficiently stirred. Then, defoaming was performed with a rotation/revolution type stirring defoaming device. The isocyanate group content rate of a polymerizable composition for forming a primer layer thus obtained is 2.4 mass% when the total amount of the composition is set to 100 mass%.

The polymerizable composition for forming a primer layer was applied to the convex surface of the plastic lens substrate in an environment of a temperature of 25°C and a relative humidity of 50% by a spin coating method, the composition for forming a primer layer applied onto the plastic lens substrate was then irradiated with ultraviolet rays (wavelength of 405 nm) in a nitrogen atmosphere (oxygen concentration of 500 ppm or lower), and this composition was cured to form a primer layer. The thickness of the formed primer layer was 6 $\mu$m.

Onto the primer layer, a polymerizable composition for forming a photochromic layer ((meth)acryloyl group content: 3.61 mmol/g) prepared as described below was applied by the spin coating method. Spin coating was performed by a method described in Japanese Patent Application Publication No. 2005-218994. After that, the polymerizable composition for forming a photochromic layer applied onto the primer layer was irradiated with ultraviolet rays (wavelength of 405 nm) in a nitrogen atmosphere (oxygen concentration of 500 ppm or lower), and this composition was cured to form a photochromic layer. The thickness of the formed photochromic layer was 40 $\mu$m.

On the photochromic layer thus formed, a protective layer was formed by a method described in Example 1 of

Japanese Patent Application Publication No. 2021-107909. The thickness of the formed protective layer was 15 μm.

A spectacle lens having the substrate, the primer layer, and the photochromic layer in this order and further having the protective layer on the photochromic layer was produced in this manner.

(Preparation of Polymerizable Composition for Forming Photochromic Layer)

In a plastic container, components shown in Table 1 were mixed in the amounts shown in Table 1.

A photochromic compound (indeno-condensed naphthopyran compound represented by a structural formula shown in the specification of U.S. Patent No. 5645767), a photoradical polymerization initiator (bis(2,4,6-trimethylbenzoyl) phenylphosphine oxide (Omnirad 819 manufactured by IGM Resin B.V.)), an antioxidant (bis[3-(3-tert-butyl-4-hydroxy-5-methylphenyl)propionate] [ethylenebis(oxyethylene)]), and a light stabilizer (bis(1,2,2,6,6-pentamethyl-4-piperidyl) sebacate) were mixed with a mixture of the polymerizable compounds obtained as described above and sufficiently stirred. After that, defoaming was performed with a rotation/revolution type stirring defoaming device. A polymerizable composition for forming a photochromic layer was prepared as described above. The content rates of the components when the total amount of the composition was set to 100 mass% were 94.9 mass% for the mixture of the polymerizable compounds, 3 mass% for the photochromic compound, 0.3 mass% for the photoradical polymerization initiator, 0.9 mass% for the antioxidant, and 0.9 mass% for the light stabilizer.

[Table 1]

| | Molecular weight | (Meth)acryloyl group content [mmol/g] | Content [parts by mass] |
|---|---|---|---|
| Trimethylolpropane polyoxyethylene ether tri(meth)acrylate | 1264 | 2. 4 | 56 |
| n-Butyl methacrylate | 142 | 7. 0 | 20 |
| Polypropylene glycol dimethacrylate | 561 | 3. 6 | 24 |

[Comparative Example 1]

A spectacle lens was produced as described in Example 1 except that the total amount (20 g) of the urethane acrylate was the urethane acrylate containing no isocyanate groups (KRM 9276 manufactured by Daicel-Allnex Ltd.).

[Comparative Example 2]

A spectacle lens was produced as described in Example 1 except that the mixing ratio between the urethane acrylate containing no isocyanate groups (KRM 9276 manufactured by Daicel-Allnex Ltd.) and the isocyanate group-containing urethane acrylate (EBECRYL 4141 manufactured by Daicel-Allnex Ltd.) was changed to KRM 9276:EBECRYL 4141 (mass ratio) = 9:1. The isocyanate group content rate of a polymerizable composition for forming a primer layer prepared in Comparative Example 2 is 1.2 mass% when the total amount of the composition is set to 100 mass%.

[Example 2]

A spectacle lens was produced as described in Example 1 except that EBECRYL 4396 (isocyanate group content rate: 7.5 mass%) manufactured by Daicel-Allnex Ltd. was used as the isocyanate group-containing urethane acrylate, and the mixing ratio between the urethane acrylate containing no isocyanate groups (KRM 9276 manufactured by Daicel-Allnex Ltd.) and the isocyanate group-containing urethane acrylate was changed to KRM 9276:EBECRYL 4396 (mass ratio) = 7:3. The isocyanate group content rate of a polymerizable composition for forming a primer layer prepared in Example 2 is 2.2 mass% when the total amount of the composition is set to 100 mass%.

[Comparative Example 3]

A spectacle lens was produced as described in Example 2 except that the mixing ratio between the urethane acrylate containing no isocyanate groups (KRM 9276 manufactured by Daicel-Allnex Ltd.) and the isocyanate group-containing urethane acrylate (EBECRYL 4396 manufactured by Daicel-Allnex Ltd.) was changed to KRM 9276:EBECRYL 4396 (mass ratio) = 8:2. The isocyanate group content rate of a polymerizable composition for forming a primer layer prepared in Comparative Example 3 is 1.5 mass% when the total amount of the composition is set to 100 mass%.

[Evaluation of Adhesive Property]

In each of the examples and the comparative examples, two spectacle lenses were produced using substrates shown in Table 2.

One of the two produced spectacle lenses was used for the evaluation of an initial adhesive property, and the other was used for the evaluation of the adhesive property at a high temperature and a high humidity.

Regarding the initial adhesive property, the adhesive property was evaluated by a cross-cut method according to JIS K 5600-5-6: 1999.

Regarding the adhesive property at a high temperature and a high humidity, the spectacle lens was immersed in a boiling hot water for one hour, and the adhesive property of the spectacle lens removed from the hot water was then evaluated by the cross-cut method according to JIS K 5600-5-6: 1999.

Table 2 shows evaluation results determined according to the following evaluation criteria, and the numbers of remaining squares are shown in parentheses. For spectacle lenses in which squares had peeled off, the peeling sites were observed, and whether or not the film peeled off from the surface of the substrate, that is, whether or not peeling occurred between the substrate and the primer layer, was confirmed.

From the results shown in Table 2, it is possible to confirm that the spectacle lens of Example 1 and the spectacle lens of Example 2 have an excellent adhesive property between the substrate and the photochromic layer compared with the spectacle lenses of Comparative Examples 1 to 3.

(Evaluation Criteria)

A: The total number of squares is 100, and the number of remaining squares is 100 (no peeling occurs).
B: The total number of squares is 100, and the number of remaining squares is 96 or more and 99 or less.
C: The total number of squares is 100, and the number of remaining squares is 90 or more and 95 or less.
D: The total number of squares is 100, and the number of remaining squares is 89 or less.

[Table 2]

| | Polymerizable composition for forming primer layer | | Evaluation of adhesive property | | | |
|---|---|---|---|---|---|---|
| | Presence or absence of isocyanate group-containing urethane (meth)acry late | Isocyana te group content rate of composit ion [mass%] | Substrate 1 | | Substrate 2 | |
| | | | Initi al | At high temperat ure and high humidity | Initi al | At high temperat ure and high humidity |
| Example 1 | Present | 2.4 | A (100) | A (100) | A (100) | A (100) |
| Comparat ive Example 1 | Absent | 0 | A (100) | A (100) | C (95) | C (95) |
| Comparat ive Example 2 | Present | 1.2 | C (90) | C (95) | A (100) | A (100) |
| Example 2 | Present | 2.2 | A (100) | A (100) | A (100) | A (100) |
| Comparat ive Example 3 | Present | 1.5 | B (98) | B (98) | A (100) | A (100) |

Regarding Example 1, the above-described evaluation of the adhesive property was performed on spectacle lenses for which the substrates 3 to 6 were used. As a result, it was confirmed that, in Example 1, the evaluation results regarding both the initial adhesive property and the adhesive property at a high temperature and a high humidity were "A" even for the spectacle lenses for which the substrates 3 to 6 were used.

On the other hand, regarding Comparative Example 2, it was confirmed that the evaluation result of the initial adhesive property was "C" (the number of remaining squares: 95) for a spectacle lens for which the substrate 4 was used and the evaluation result of the adhesive property at a high temperature and a high humidity was "D" (the number of remaining squares: 2) for a spectacle lens for which the substrate 5 was used. Regarding Comparative Example 3, it was

confirmed that the evaluation results regarding both the initial adhesive property and the adhesive property at a high temperature and a high humidity were "C" (the number of remaining squares: 95) for a spectacle lens for which the substrate 6 was used.
For the spectacle lens for which the substrate 4 was used, the adhesive property at a high temperature and a high humidity was evaluated after the spectacle lens was immersed in a hot water having a temperature of 50°C for one hour.

[Study of Influences of Mixing Ratio between Urethane (Meth)acrylates on Photochromic Performance]

Fig. 1 shows evaluation results regarding the influences of the mixing ratio between urethane (meth)acrylates on the photochromic performance. The evaluation results shown in Fig. 1 were acquired as described below.
In Example 1, the mixing ratio between the urethane acrylate containing no isocyanate groups (KRM 9276 manufactured by Daicel-Allnex Ltd.) and the isocyanate group-containing urethane acrylate (EBECRYL 4141 manufactured by Daicel-Allnex Ltd.) in the polymerizable composition for forming a primer layer was set to KRM 9276:EBECRYL 4141 (mass ratio) = 8:2. A spectacle lens was produced using the substrate 1 as a substrate by the method described in Example 1 except that this mixing ratio was changed. Regarding the produced spectacle lens, various performances were evaluated by the following methods (relative evaluation using differences from a reference lens including no primer layers). In Fig. 1, the horizontal axis indicates the content rate (unit: mass%) of the isocyanate group-containing urethane acrylate (EBECRYL 4141 manufactured by Daicel-Allnex Ltd.) relative to 100 mass% of the total of the urethane (meth)acrylates.

<Transmittance>

The luminous transmittance was obtained by the following method in accordance with JIS T 7333: 2005.
The transmittance of each spectacle lens before the following measurement of the coloring density was measured using a spectrophotometer manufactured by Otsuka Electronics Co., Ltd. The relative evaluation results of luminous transmittance (expressed as "initial transmittance") obtained from the measurement results within a wavelength range of 380 nm to 780 nm are shown in Fig. 1. It means that, as the value of the initial transmittance thus obtained becomes larger, visible light-transmitting properties without light irradiation become superior.

<Coloring Density>

The luminous transmittance was obtained by the following method in accordance with JIS T 7333: 2005.
The convex surface of each spectacle lens was irradiated with light for 15 minutes using a xenon lamp as a light source through an air mass filter to color the photochromic layer. This light irradiation was performed so that the irradiance and the irradiance tolerance reached values shown in Table 3 as specified in JIS T 7333: 2005. The transmittance during this coloring was measured with a spectrophotometer manufactured by Otsuka Electronics Co., Ltd. The relative evaluation results of luminous transmittance (expressed as "transmittance during coloring") obtained from the measurement results within a wavelength range of 380 nm to 780 nm are shown in Table 1. It means that, as the value of the transmittance during coloring thus obtained becomes smaller, the photochromic layer is colored in a higher density.

[Table 3]

| Wavelength range (nm) | Irradiance (W/m²) | Irradiance tolerance (W/m²) |
|---|---|---|
| 300~340 | <2.5 | – |
| 340~380 | 5.6 | ±1.5 |
| 380~420 | 12 | ±3.0 |
| 420~460 | 12 | ±3.0 |
| 460~500 | 26 | ±2.6 |

<Fading Rate>

The convex surface of each spectacle lens was irradiated with light for 15 minutes (900 seconds) using a xenon lamp through an air mass filter to color the photochromic compound in the photochromic layer. The transmittance during this coloring (measurement wavelength: 550 nm) was measured with a spectrophotometer manufactured by Otsuka Electronics Co., Ltd. The light irradiation was performed so that the irradiance and the irradiance tolerance reached values shown in Table 3 as specified in JIS T 7333: 2005. The transmittance thus measured is referred to as "transmittance during coloring."

After the measurement of the transmittance during coloring, the transmittance after 60 seconds from the stop of the light irradiation (hereinafter, referred to as "transmittance after 60 s of fading") was measured. The fading rate (unit: %/sec) was calculated by a calculation formula: fading rate=[(transmittance after 60 s of fading - transmittance during coloring)/60], and the relative evaluation results are shown in Fig. 1. It can be said that, as the value of the fading rate thus obtained becomes larger, the fading rate becomes faster.

<70% Transmittance Arrival Time>

The time necessary for the transmittance of the lens to be restored to up to 70% of the initial transmittance (100%) (for the lens to fade) after the light irradiation for the measurement of the transmittance during coloring was stopped was obtained. The time thus obtained was defined as "70% transmittance arrival time", and the relative evaluation results are shown in Fig. 1. It can be said that, as the value of the 70% transmittance arrival time thus obtained becomes shorter, the fading rate becomes faster.

The results shown in Fig. 1 show that, in consideration of various performances of the photochromic article, it can be said that the content of the isocyanate group-containing urethane (meth)acrylate in the polymerizable composition for forming the primer layer is preferably 50 mass% or less, more preferably 40 mass% or less, and still more preferably 30 mass% or less when the total of the isocyanate group-containing urethane (meth)acrylate and the urethane (meth)acrylate containing no isocyanate groups is set to 100 mass%. On the other hand, from the viewpoint of improving the adhesive property between the substrate and the photochromic layer, the amount of the isocyanate group-containing urethane (meth)acrylate in the polymerizable composition for forming the primer layer is preferably large. From this fact, the content of the isocyanate group-containing urethane (meth)acrylate in the polymerizable composition for forming the primer layer can be, for example, 5 mass% or more and is preferably 10 mass% or more, more preferably 15 mass% or more, and still more preferably 20 mass% or more when the total of the isocyanate group-containing urethane (meth)acrylate and the urethane (meth)acrylate containing no isocyanate groups is set to 100 mass%.

Finally, each of the above-described aspects will be summarized.

[1] A photochromic article having:

a substrate;
a primer layer formed by curing a polymerizable composition for forming the primer layer, and
a photochromic layer formed by curing a (meth)acrylate-based polymerizable composition containing a photochromic compound,
in this order,
in which the polymerizable composition for forming the primer layer contains isocyanate group-containing urethane (meth)acrylate, and
the polymerizable composition for forming the primer layer has an isocyanate group content rate of 2.0 mass% or more when a total amount of the composition is set to 100 mass%.

[2] The photochromic article according to [1], in which the polymerizable composition for forming the primer layer further contains urethane (meth)acrylate containing no isocyanate groups.
[3] The photochromic article according to [2], in which the polymerizable composition for forming the primer layer contains 10 mass% or more and 50 mass% or less of the isocyanate group-containing urethane (meth)acrylate when a total of the isocyanate group-containing urethane (meth)acrylate and the urethane (meth)acrylate containing no isocyanate groups is set to 100 mass%.
[4] The photochromic article according to any one of [1] to [3], wherein the photochromic article is a spectacle lens.
[5] The photochromic article according to any one of [1] to [3], wherein the photochromic article is a goggles lens.
[6] The photochromic article according to any one of [1] to [3], wherein the photochromic article is a visor part of a sun visor.
[7] The photochromic article according to any one of [1] to [3], wherein the photochromic article is a shield member of a

helmet.

[8] Spectacles including the spectacle lens according to [4].

[9] A method for producing a photochromic article, including:

applying a polymerizable composition for forming a primer layer onto a substrate;
forming a primer layer by performing a curing treatment by light irradiation on the applied polymerizable composition for forming the primer layer;
applying a (meth)acrylate-based polymerizable composition containing a photochromic compound onto the formed primer layer; and
forming a photochromic layer by performing a curing treatment by light irradiation on the applied (meth)acrylate-based polymerizable composition containing the photochromic compound,
in which the polymerizable composition for forming the primer layer contains isocyanate group-containing (meth) urethane acrylate, and
the polymerizable composition for forming the primer layer has an isocyanate group content rate of 2.0 mass% or more when a total amount of the composition is set to 100 mass%.

[10] The method for producing the photochromic article according to [9], in which the polymerizable composition for forming the primer layer further contains urethane (meth)acrylate containing no isocyanate groups.

[11] The method for producing the photochromic article according to [10], in which the polymerizable composition for forming the primer layer contains 10 mass% or more and 50 mass% or less of the isocyanate group-containing urethane (meth)acrylate when a total of the isocyanate group-containing urethane (meth)acrylate and the urethane (meth)acrylate containing no isocyanate groups is set to 100 mass%.

[12] The method for producing the photochromic article according to any one of [9] to [11], in which the photochromic article is a spectacle lens.

[13] The method for producing the photochromic article according to any one of [9] to [11], in which the photochromic article is a goggle lens.

[14] The method for producing the photochromic article according to any one of [9] to [11], in which the photochromic article is a visor part of a sun visor.

[15] The method for producing the photochromic article according to any one of [9] to [11], in which the photochromic article is a shield member of a helmet.

Two or more of the various aspects and the various forms described in the present specification can be combined together in an arbitrary combination.

The embodiments disclosed herein are simply examples in all respects and should not be considered as restrictive. The scope of the present invention is shown not by the above description but by the scope of the claims, and is intended to encompass all modifications within equivalent meaning and scope to the scope of the claims.

[Industrial Applicability]

The present invention is useful in the technical fields of spectacles, goggles, sun visors, helmets, and the like.

## Claims

**1.** A photochromic article comprising:

a substrate;
a primer layer formed by curing a polymerizable composition for forming the primer layer, and
a photochromic layer formed by curing a (meth)acrylate-based polymerizable composition containing a photochromic compound,
in this order,
wherein the polymerizable composition for forming the primer layer contains isocyanate group-containing urethane (meth)acrylate, and
the polymerizable composition for forming the primer layer has an isocyanate group content rate of 2.0 mass% or more when a total amount of the composition is set to 100 mass%.

**2.** The photochromic article according to claim 1, wherein the polymerizable composition for forming the primer layer further contains urethane (meth)acrylate containing no isocyanate groups.

3. The photochromic article according to claim 2, wherein the polymerizable composition for forming the primer layer contains 10 mass% or more and 50 mass% or less of the isocyanate group-containing urethane (meth)acrylate when a total of the isocyanate group-containing urethane (meth)acrylate and the urethane (meth)acrylate containing no isocyanate groups is set to 100 mass%.

4. The photochromic article according to any one of claims 1 to 3, wherein the photochromic article is a spectacle lens.

5. The photochromic article according to any one of claims 1 to 3, wherein the photochromic article is a goggles lens.

6. The photochromic article according to any one of claims 1 to 3, wherein the photochromic article is a visor part of a sun visor.

7. The photochromic article according to any one of claims 1 to 3, wherein the photochromic article is a shield member of a helmet.

8. Spectacles comprising:
the spectacle lens according to claim 4.

9. A method for producing a photochromic article, comprising:

applying a polymerizable composition for forming a primer layer onto a substrate;
forming a primer layer by performing a curing treatment by light irradiation on the applied polymerizable composition for forming the primer layer;
applying a (meth)acrylate-based polymerizable composition containing a photochromic compound onto the formed primer layer; and
forming a photochromic layer by performing a curing treatment by light irradiation on the applied (meth)acrylate-based polymerizable composition containing the photochromic compound,
wherein the polymerizable composition for forming the primer layer contains isocyanate group-containing (meth) urethane acrylate, and
the polymerizable composition for forming the primer layer has an isocyanate group content rate of 2.0 mass% or more when a total amount of the composition is set to 100 mass%.

10. The method for producing the photochromic article according to claim 9, wherein the polymerizable composition for forming the primer layer further contains urethane (meth)acrylate containing no isocyanate groups.

11. The method for producing the photochromic article according to claim 10, wherein the polymerizable composition for forming the primer layer contains 10 mass% or more and 50 mass% or less of the isocyanate group-containing urethane (meth)acrylate when a total of the isocyanate group-containing urethane (meth)acrylate and the urethane (meth)acrylate containing no isocyanate groups is set to 100 mass%.

12. The method for producing the photochromic article according to any one of claims 9 to 11, wherein the photochromic article is a spectacle lens.

13. The method for producing the photochromic article according to any one of claims 9 to 11, wherein the photochromic article is a goggle lens.

14. The method for producing the photochromic article according to any one of claims 9 to 11, wherein the photochromic article is a visor part of a sun visor.

15. The method for producing the photochromic article according to any one of claims 9 to 11, wherein the photochromic article is a shield member of a helmet.

[Fig. 1]

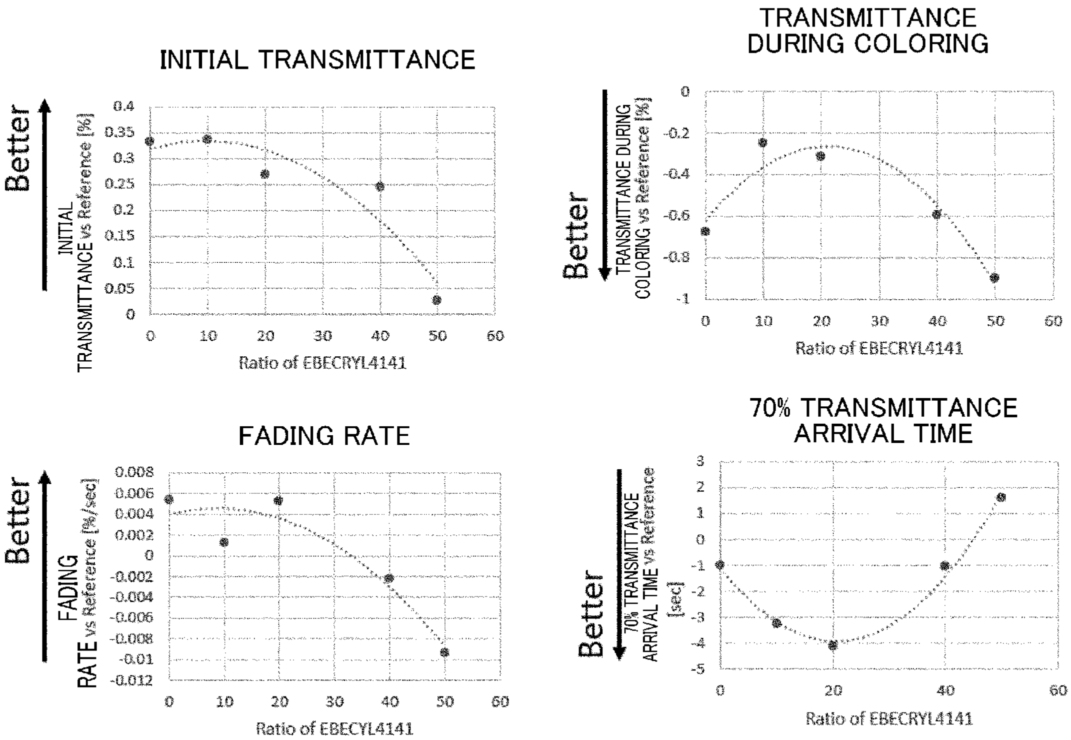
INITIAL TRANSMITTANCE
Better
INITIAL TRANSMITTANCE vs Reference [%]
Ratio of EBECRYL4141
TRANSMITTANCE DURING COLORING
Better
TRANSMITTANCE DURING COLORING vs Reference [%]
Ratio of EBECRYL4141
FADING RATE
Better
FADING RATE vs Reference [%/sec]
Ratio of EBECYL4141
70% TRANSMITTANCE ARRIVAL TIME
Better
70% TRANSMITTANCE ARRIVAL TIME vs Reference [sec]
Ratio of EBECRYL4141

## INTERNATIONAL SEARCH REPORT

International application No.
**PCT/JP2023/023697**

**A. CLASSIFICATION OF SUBJECT MATTER**

***G02B 5/23***(2006.01)i; ***G02B 1/04***(2006.01)i; ***G02C 7/00***(2006.01)i; ***G02C 7/02***(2006.01)i; ***G02C 7/10***(2006.01)i
FI: G02B5/23; G02C7/02; G02B1/04; G02C7/00; G02C7/10

According to International Patent Classification (IPC) or to both national classification and IPC

**B. FIELDS SEARCHED**

Minimum documentation searched (classification system followed by classification symbols)

G02B5/23; G02B1/04; G02C7/00; G02C7/02; G02C7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/016313 A1 (TOKUYAMA CORP.) 05 February 2015 (2015-02-05) paragraphs [0022]-[0046] | 1-15 |
| A | JP 2020-517764 A (ESSILOR INTERNATIONAL) 18 June 2020 (2020-06-18) paragraphs [0023]-[0030] | 1-15 |
| A | JP 2005-199683 A (TOKUYAMA CORP.) 28 July 2005 (2005-07-28) paragraphs [0031]-[0052], [0113]-[0130] | 1-15 |
| A | WO 2021/132051 A1 (HOYA LENS THAILAND LTD.) 01 July 2021 (2021-07-01) paragraphs [0013]-[0028], [0058] | 1-15 |
| A | WO 2017/039019 A1 (TOKUYAMA CORP.) 09 March 2017 (2017-03-09) p. 58, lines 1-3 | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/023697**

| Patent document cited in search report | Publication date (day/month/year) | Patent family member(s) | Publication date (day/month/year) |
|---|---|---|---|
| WO 2015/016313 A1 | 05 February 2015 | (Family: none) | |
| JP 2020-517764 A | 18 June 2020 | US 2020/0095487 A1<br>paragraphs [0027]-[0034]<br>WO 2018/197561 A1<br>EP 3395922 A1<br>KR 10-2019-0123346 A<br>CN 110546227 A | |
| JP 2005-199683 A | 28 July 2005 | US 2006/0269741 A1<br>paragraphs [0033]-[0054], [0107]-[00126]<br>WO 2004/078476 A1<br>EP 1602479 A1 | |
| WO 2021/132051 A1 | 01 July 2021 | US 2022/0221782 A1<br>paragraphs [0025]-[0067], [0080]-[0085]<br>EP 4083079 A1<br>CN 114641710 A | |
| WO 2017/039019 A1 | 09 March 2017 | US 2018/0251657 A1<br>paragraphs [0287], [0288]<br>EP 3333602 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6346183 B
- JP 107909 A
- JP 2005218994 A
- JP 2021107909 A
- US 5645767 A